Europäisches Patentamt

(19) European Patent Office

Office européen des brevets

(11) EP 0 574 969 B1

## (12) EUROPEAN PATENT SPECIFICATION

(45) Date of publication and mention
of the grant of the patent:
**20.03.2002 Bulletin 2002/12**

(51) Int Cl.[7]: **G06T 5/20**

(21) Application number: **93201432.7**

(22) Date of filing: **19.05.1993**

(54) **A method and apparatus for noise reduction**

Verfahren und Vorrichtung zur Geräuschunterdrückung

Méthode et dispositif de réduction du bruit

(84) Designated Contracting States:
**BE DE FR GB NL**

(30) Priority: **19.06.1992 EP 92201802**

(43) Date of publication of application:
**22.12.1993 Bulletin 1993/51**

(73) Proprietor: **Agfa-Gevaert**
**2640 Mortsel (BE)**

(72) Inventors:
• **Vuylsteke, Pieter, c/o Agfa-Gevaert N.V.**
**B-2640 Mortsel (BE)**
• **Dewaele, Piet, c/o Agfa-Gevaert N.V.**
**B-2640 Mortsel (BE)**

(56) References cited:
US-A- 4 682 230        US-A- 4 718 104
US-A- 4 950 894        US-A- 4 974 187

• PATTERN RECOGNITION LETTERS vol. 12, no. 8 , August 1991 , AMSTERDAM pages 467 - 475 RAE-HONG PARK & PETER MEER 'Edge-preserving artifact-free smoothing with image pyramids'
• IEEE TRANSACTIONS ON PATTERN ANALYSIS AND MACHINE INTELLIGENCE vol. 13, no. 5 , May 1991 , NEW YORK pages 426 - 440 SURENDRA RANGANATH 'Image Filtering Using Multiresolution Representations'

**Description**

Field of the invention.

This invention relates to a noise reduction method and to an apparatus for reducing the noise of a digital image.
More in particular it relates to such method for use in a medical radiographic imaging system, such as a computed radiography system.

Background of the invention.

Images obtained from image sensing devices always contain noise to some extent. In the application field of medical Rx-imaging there exists a well known tradeoff between diagnostic image quality and patient dose, due to the presence of noise in the radiation source.
Linear and nonlinear filters are widely used in image processing applications to reduce the noise level. Linear filters perform very well in attenuating the noise component, but at the same time this category of filters smear the edges and small structures within the image. In this respect many nonlinear filters preserve edges much better, such as described in the paper: Fong Y.S., Pomalaza-Raez C.A., Wang X.H., "Comparison study of nonlinear filters in image processing applications", Optical Engineering, vol. 28, no. 7, pp. 749-760, July 1989.
Ideally the filter parameters should be adjusted to the local image statistics. A basic adaptive noise filtering method is described in: Lee J.S., "Digital Image Enhancement and Noise Filtering by use of Local Statistics", IEEE Trans. on Pattern Analysis and Machine Intelligence, vol. 2, no. 2, pp. 165-168, March 1980. Typically the local variance is used to control the degree of smoothing.
Until now research on noise filtering in place domain was focussed on local operators with a fixed size. These kind of filters perform optimally only if the noise spatial spectrum is confined to a narrow band, usually the higher frequency portion of the image spectrum. If the noise band is not very narrow, larger filter sizes must be used, and artifacts are likely to occur in regions of abruptly changing statistics such as in the vicinity of edges. Filters known as 'sigma filter', or 'adaptive mean filter' as they are called in the above comparative study of Wong et al. provide a solution to this problem, but they are computationally expensive.
In the field of digital image processing a novel paradigm of multiresolution computation has evolved the last decade, sometimes called pyramidal image processing. According to this concept multiple sets of processing parameters are used, tuned to a wide range of detail sizes. The basic concepts and efficient implementations of pyramidal decomposition are described in: Burt P.J., "Fast Filter Transforms for Image Processing", Computer Graphics and Image Processing, vol. 16, pp. 20-51, 1981; Crowley J.L., Stern R.M., "Fast Computation of the Difference of Low-Pass Transform", IEEE Trans. on Pattern Analysis and Machine Intelligence, vol. 6, no. 2, March 1984, and in US-A-4, 718, 104.
Alternative multiresolution representations are presented in: Mallat S.G., "A Theory for Multiresolution Signal Decomposition: The Wavelet Representation", IEEE Trans. on Pattern Analysis and Machine Intelligence, vol. 11, no. 7, July 1989; Ebrahimi T., Kunt M., "Image compression by Gabor Expansion", Optical Engineering, vol. 30, no. 7, pp. 873-880, July 1991.
Until now the main purpose of these kind of image processing techniques has been directed towards image compression.
Other applications include multiresolution image segmentation, image interpolation, and filter synthesis with specified frequency response.
A multiresolution noise filtering algorithm is proposed in: Ranganath S., "Image Filtering Using Multiresolution Representations", IEEE Trans. on Pattern Analysis and Machine Intelligence, vol. 13, no. 5, pp. 426-440, May 1991. According to the paradigm described in this paper, a sequence of low pass approximations of the original image at successively coarser resolution levels are computed, and adaptive noise suppression is achieved by linearly combining all levels at every pixel position, the weight coefficients being adapted to the local noise statistics at every pixel.
In Pattern Recognition Letters, vol. 12, no. 8 of August 1991 an article entitled 'Edge preserving artifact free smoothing with image pyramids' has been published. This article discloses a smoothing method in which smoothing is performed by assigning the local mean of non-overlapping pixel blocks of sizes either 8x8, 4x4, or 2x2 to all pixels of the block, depending on whether the block is homogeneous or not (assignment starting with the larger block sizes). Pixels which do not belong to a homogeneous block of any size are assigned a value which is a weighted average of the input pixel value and the 2x2 local mean.
Assigning identical values to blocks of pixels inherently causes so called "block artefacts", a problem being recognised in the same reference.

Object of the invention.

It is a principal object of the present invention to provide a method for reducing the noise level in a digital image.

Another object of the present invention is to provide a method for suppressing noise in a digital image without significantly reducing the relevant signals, so that the signal to noise level increases.

Another object of the present invention is to provide a method for reducing the noise level in a digital image without blurring the edges.

Another object of the present invention is to provide a method for reducing the noise level in a digital image over a wide spatial frequency band.

A further object of the present invention is to provide a method for reducing the noise level in a digital image without having prior knowledge of the signal to noise ratio.

A still further object of the present invention is to provide a method which combines edge preserving noise suppression with contrast enhancement so that excellent contrast can be achieved without boosting the inherent image noise to a disturbing level.

A still further object of the present invention is to provide a method for reducing the noise level in digital images with essentially poisson distributed noise, such as images obtained from digital radiography and computed tomography.

A still further object of the present invention is to provide an apparatus for reducing noise with the above mentioned features.

Summary of the invention.

We have found that the above objectives can be met by applying a method for reducing noise in a digital image represented by an array of pixel values by processing said digital image, comprising the steps of:

a) decomposing (30) said digital image (2) into a set of detail images (31) at multiple resolution levels and a residual image (31') at a resolution level lower than said multiple resolution levels,

b) processing (32) said detail images,

c) computing a processed image by applying a reconstruction algorithm (34) to the residual image (31') and the processed detail images(33'), said reconstruction algorithm being such that if it were applied to the residual image (31') and the detail images (31) without processing, then said digital image (2) or a close approximation thereof would be obtained.

characterised in that said processing comprises the steps of

d) estimating (61-66) the noise level in each detail image or recalling said noise level from a noise table comprising predetermined typical noise level values corresponding to detail images with similar noise statistics;

e) establishing a local observation neighbourhood around each pixel of each detail image and estimating (61-70) local image content within said neighbourhood,

f) pixelwise attenuating the detail images as a function of the estimated amount of image content and in accordance with said estimated noise level (71-73).

Typically the noise level is determined as the noise variance in each detail image.

According to a specific embodiment of this method a set of noise suppression functions corresponding to each detail image are computed, said functions being monotonically non-decreasing in one variable and parametrically depending on said noise variance in a non-increasing monotonic way, said functions being positive and asymptotically reaching a maximum value equal to one. Each detail image is attenuated by multiplying it with the corresponding noise suppression function evaluated at an abscissa value equal to said local detail image variance.

Specific embodiments of methods for decomposing the image representation into approximation images at different resolution levels and into a residual image and of the corresponding reconstruction process are described in the published European application EP-A- 527 525.

Preferably the multiresolution representation has a pyramidal structure such that the number of pixels in each detail image decreases at each coarser resolution level.

Further details as to the decomposition of the image into a multiresolution representation are also given furtheron in relation to the drawings.

Our method differs from the prior art method described in the article published in Pattern Recognition Letters, vol. 12, no. 8 of August 1991 which was mentioned in the introductory part of this application in the following aspects. In the pyramid representation of our application, the mentioned pyramid is a detail pyramid. Detail pixels or transform coefficients are essentially differential quantities, which indicate the difference between two approximations of the original image at subsequent resolution levels. Since detail is differential, smoothing can be done simply by attenuating detail.

The above prior art reference does not mention a detail pyramid representation, only pyramids of spatial mean and variance values are considered.

- The way in which smoothing is performed in the prior art reference has been described in the introductory part of this application and differs from our method in that in our method smoothing is performed by attenuating detail (pixel or transform coefficients) at different resolution levels and accumulating attenuated detail starting from some intermediate level approximating the image, up to the finest resolution level.
  Hence, blocking artefacts will not appear as long as detail is represented by continuous functions.
- In the prior art reference the noise level is computed using a known mode estimation technique, based on spatial variances of the original image, the variance values are computed in the course of building two pyramids: one for the original image and one for the squared original.
  In our method the estimation of the noise level applies to detail,i.e. differential information, being either bandpass images or detail transform coefficients. This is done for each of the finer resolution levels independently, and the resulting noise levels are used as a reference for controlling noise reduction at the same resolution levels. As a consequence of this approach the estimated noise levels (and hence the net smoothing effect) will dramatically decrease with increasing resolution, since the lower resolution bandpass images (or transform coefficient planes) actually contain much less noise than the higher.

In accordance with another embodiment the decomposition is performed by applying a transform to said image yielding detail transform images at multiple resolution levels and a residual coefficient, each detail transform image comprising a set of transform coefficients expressing the relative contribution to the original image of the corresponding basis function out of a set of predetermined basis functions, each of said functions representing local detail at a specific resolution level and being non-periodic, and having zero mean value,
and wherein said transform is characterised in that there exists an inverse transform which returns the original image or a close approximation thereof when being applied to said transform coefficients and said residual coefficient.
The method further comprises the steps of

- estimating the noise level in each transform image or recalling said noise level from a noise table comprising predetermined typical noise level values corresponding to transform images with similar noise statistics;
- establishing a local observation neighborhood around each pixel of each transform image, estimating local image content within said neigborhood,
- pixelwise attenuating the transform images as a function of the estimated amount of image content and in accordance with said estimated noise level.

Furthermore a reconstruction step is performed consisting of computing a processed image by applying said inverse tranform to said attenuated detail transform images and said residual coefficient.
In a preferred embodiment said basis functions are othogonal. Preferably they are discrete wavelets.
The present invention further discloses an apparatus for processing an electronic representation of an image comprising

- means (30) for decomposing said electronic representation into a sequence of detail images at multiple resolution levels and a residual image at a resolution level lower than the minimum of said multiple resolution levels,
- means (32) for processing said detail images,
- means (34) for computing a processed image by applying a reconstruction algorithm to the residual image and the processed detail images, said reconstruction algorithm being such that if it were applied to the residual image and the detail images without processing, then said electronic image or a close approximation thereof would be obtained,

characterised in that said apparatus comprises

- means (61) for storing said detail images,
- means (62-70) for estimating the noise level in each detail image or recalling said noise level from a noise table comprising predetermined typical noise level values corresponding to detail images with similar noise statistics;
- means (62-66) for estimating local image content within a neighbourhood around each pixel in each said detail image,
- means (71-73) for pixelwise attenuating each detail image as a function of said local image content in accordance with said estimated noise level.

Preferably said apparatus comprises means for computing the local variance of pixels in a neighbourhood, means for storing said local variance, a histogram computation circuit for computing the histogram of the computed local variance values,
a maximum locator for determining the variance value with the highest occurrence in the histogram, means for reading out detail images from said storage means, means for calculating a noise suppression coefficient as a function of local detail image variance at each resolution level, and a multiplier for pixelwise multiplying each detail image at a particular resolution level with the corresponding suppression coefficient.

The representation of the image in the form of an array of pixels is commonly obtained by means of an image acquisition section being any apparatus or part thereof for obtaining an electronic representation of an image. For application in the medical field the acquisition unit can be an apparatus wherein an electronic representation of an image is obtained directly such as a medical scanner or a tomography apparatus, an image intensifier, etc. or alternatively an apparatus wherein an electronic representation is obtained through the intermediary of a storage device such as a radiographic film or a photostimulable phosphor screen.

After processing the image can be applied to an output apparatus such as a hardcopy recording apparatus, for example a laser printer or a thermal printer or a visual display apparatus such as a monitor.

Further details relating to an apparatus as well as to different embodiments of the method of the present invention are described hereinbelow with reference to the drawings wherein

Fig. 1 is a block scheme generally illustrating an apparatus according to the present invention,
Fig. 2 is a specific embodiment of an image acquisition apparatus,
Fig. 3a is a block scheme illustrating the different steps of the noise reducing system,
Fig. 3b is a block scheme of an alternative embodiment of the noise reducing section completed with an additional device for contrast enhancement,
Fig. 4a illustrates one way of performing the decomposition step in the method of the invention,
Fig. 4b illustrates the corresponding reconstruction process,
Fig. 4c shows the coefficients of an example of a Gaussian filter,
Fig. 5 illustrates an embodiment of a pyramidal noise reduction section,
Fig. 6 is a variance histogram,
Fig. 7 is a plot of a noise suppression function.

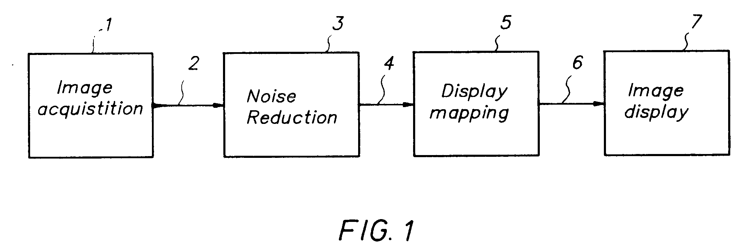

A simplified block diagram is shown in Fig. 1. An image acquisition unit 1 acquires a digital image by sampling the output signal of an image sensor, such as a CCD sensor, a video camera, an image intensifier or an image scanner, quantizes it using an A/D convertor into an array of pixelvalues, called raw or original image 2, with pixelvalues typically 8 to 12 bits long, temporarily stores the pixelvalues in memory if desired, and transmits the digital image 2 to a noise reduction unit 3, where the noise content is reduced in accordance with the present invention, next the enhanced image 4 is transmitted to the display mapping section 5 which modifies the pixel values according to a contrast curve, such that the relevant image information is presented in an optimal way, when the processed image 6 is visualised on an image output device 7, which produces either a hardcopy on transparent film or on paper, or a viewable image on a display screen (CRT).

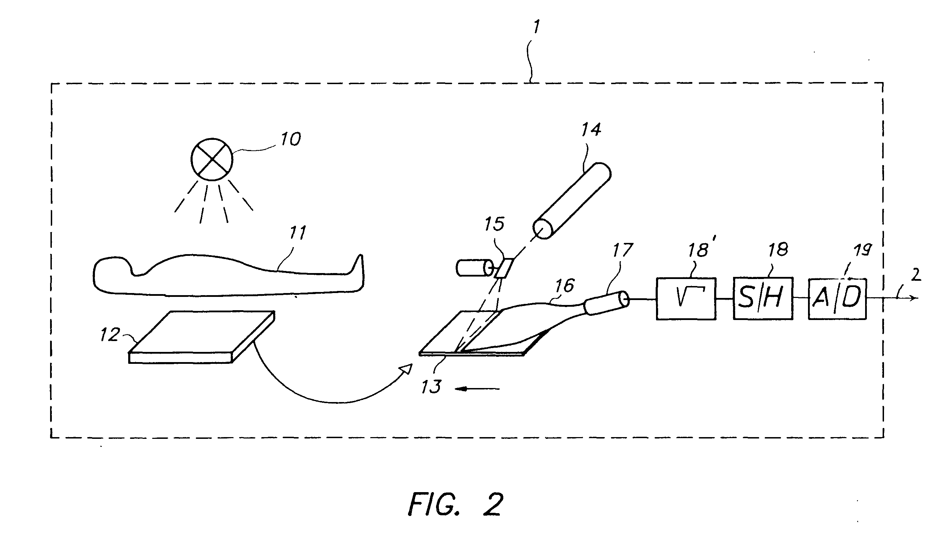

A preferred embodiment of image acquisition unit 1 is shown in Fig. 2. A radiation image of an object 11 or part thereof, e.g. a patient is recorded onto a photostimulable phosphor plate by exposing said plate to X-rays originating from an X-ray source 10, transmitted through the object. The photostimulable phosphor plate 13 is conveyed in a cassette 12. In a radiation image readout apparatus the latent image stored in the photostimulable phosphor plate is read out by scanning the phosphor sheet with stimulating rays emitted by a laser 14. The stimulating rays are deflected according to the main scanning direction by means of a galvanometric deflection device 15. The secondary scanning motion is performed by transporting the phosphor sheet in the direction perpendicular to the scanning direction. A light collector 16 directs the light obtained by stimulated emission onto a photomultiplier 17 where it is converted into an electrical signal, which is next amplified by means of a square root amplifier 18', sampled by a sample and hold circuit 18, and converted into a 12 bit digital signal by means of an analog to digital converter 19. From there the digital image 2, called raw or original image, is sent to the noise reduction section 3.

The square root characteristic of the amplifier 18' converts the signal in such a way that the noise level within the original image 2 is nearly independent of the signal amplitude, although the signal resulting from the photomultiplier is nearly poisson distributed. This kind of preprocessing is explictly done with this type of image source within the context of the present invention; it is not required however in those cases where the acquired images already have signal independent, additive noise statistic.

The use of a square root amplifier has additional advantageous especially when compared with the commonly used logarithmic conversion. These advantageous are described hereinbelow.

As a consequence of A/D conversion of a linear signal the ratio of the value of the least significant bit to the standard deviation of the signal continuously decreases.

In case of a logarithmic conversion of a linear signal before A/D conversion the number of significant bits does not decrease as fast as the standard deviation of the signal.

Both situations give rise to an unefficient use of the resolution of the A/D convertor.

Square root compression that takes into account the Poisson distribution inherent with the detection of a limited number of x-ray quanta per pixel optimally uses the resolution of the A/D convertor.

Further, non-linear compression involves a trade-off between amplitude and bandwidth of the signal. Since logarithmic compression is stronger than square root compression, it will generate more high frequency components.

To avoid aliasing, the bandwidth of the system must be restricted to half the sampling frequency. Restricting the bandwidth will inevitably remove some of the high frequency components generated during non-linear compression. As a result the waveform that is reconstructed from digitised data, which were logarithmically compressed prior to A/D conversion will show more harmonic distortion than an identical waveform reconstructed from data that were compressed with a square root characteristic.

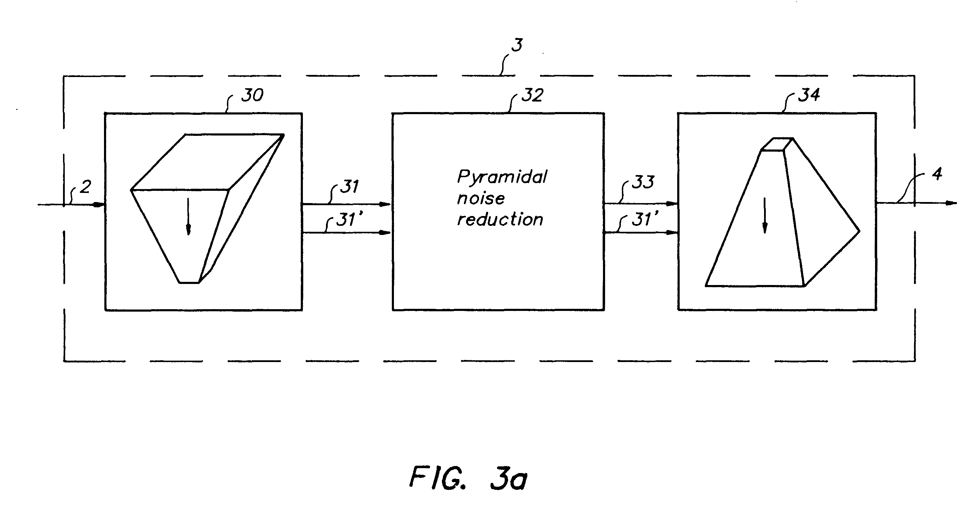

The noise reduction system 3 consists of three main parts, schematically drawn in Fig. 3a. In a decomposition section 30 the original image 2 is decomposed into a sequence of detail images, which represent the amount of detail present in the original image at multiple resolution levels, from fine to coarse.

After the last decomposition step a residual image 31' may be left. The resulting detail images 31, which represent the amount of local detail at successive resolution levels are next supplied to the pyramidal noise reduction section 32, where the detail images are pixelwise attenuated as a function of the locally estimated amount of relevant signal content. In the image reconstruction section 34 the noise reduced detail images 33 are next accumulated at all resolution levels, along with the residual image 31' to compute the enhanced image 4.

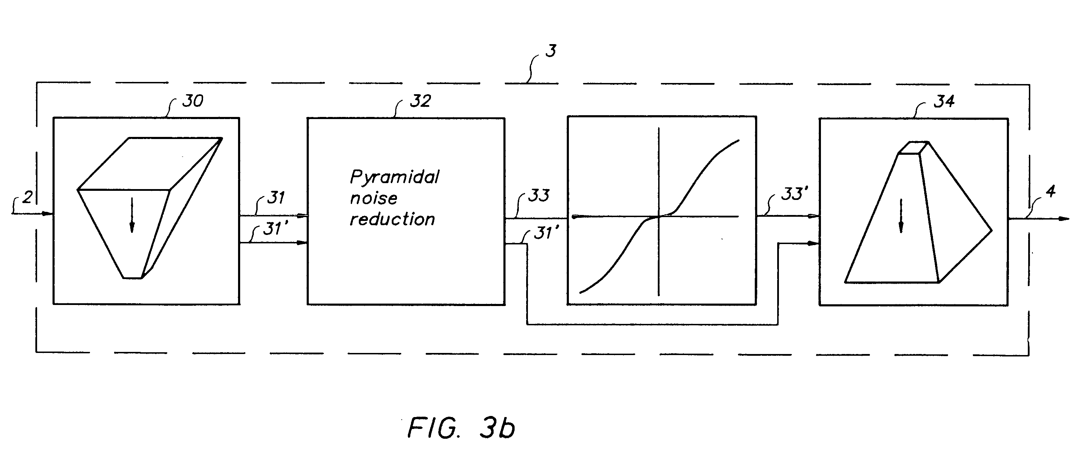

Fig. 3b shows a block diagram of an alternative embodiment of the noise reduction section according to the present invention, which includes an additional device 32' for boosting the image contrast immediately after noise reduction. Enhanced contrast is achieved by modifying the pixels of the noise reduced detail images according to a non-linear monotonically increasing odd mapping function, and supplying these modified detail images to the reconstruction section 34.

With this combination of edge preserving noise suppression and contrast enhancement applied to computed radiography images, excellent contrast can be achieved without boosting the inherent noise to a disturbing level.

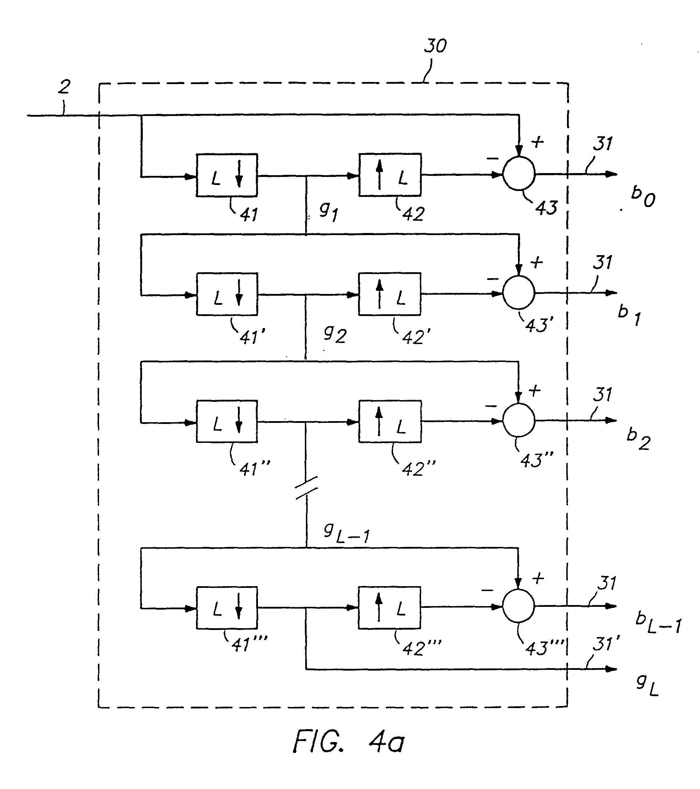

A preferred embodiment of the decomposition process is depicted in Fig. 4a. The original image is filtered by means of a low pass filter 41, and subsampled by a factor of two, which is implemented by computing the resulting low resolution approximation image $g_1$ only at every other pixel position of every alternate row.

A detail image $b_0$ at the finest level is obtained by interpolating the low resolution approximation $g_1$ with doubling of the number of rows and columns, and pixelwise subtracting the interpolated image from the original image 2.

The interpolation is effectuated by the interpolator 42, which inserts a column of zero values every other column, and a row of zero values every other row respectively, and next convolves the extended image with a low pass filter. The subtraction is done by the adder 43.

The same process is repeated on the low resolution approximation $g_1$ instead of the original image 2, yielding an approximation of still lower resolution $g_2$ and a detail image $b_1$.

A sequence of detail images $b_i$, i = 0..L-1 and a residual low resolution approximation $g_L$ are obtained by iterating the above process L times. The finest detail image $b_0$ has the same size as the original image. The next coarser detail image $b_1$ has only half as many rows and columns as the first detail image $b_0$. At each step of the iteration the maximal spatial frequency of the resulting detail image is only half that of the previous finer detail image, and also the number of columns and rows is halved, in accordance with the Nyquist criterion. After the last iteration a residual image $g_L$ 31' is left which can be considered to be a very low resolution approximation of the original image. In the extreme case it consists of only 1 pixel which represents the average value of the original image 2.

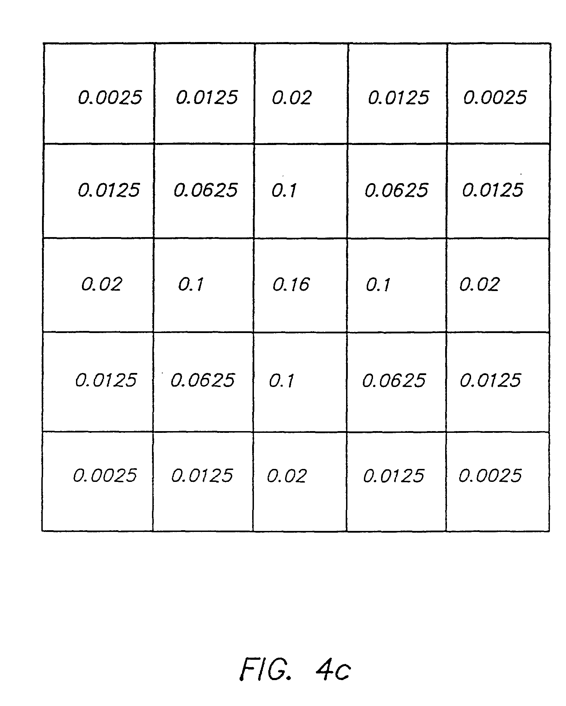

The filter coefficients of the low pass filter of the preferred embodiment are presented in Fig. 4c. They correspond approximately to the samples of a two dimensional gaussian distribution on a 5x5 grid. The same filter coefficients are used for the low pass filters 41, 41',.. 41''' at all scales.

The same filter kernel with all coefficients multiplied by 4 is also used within the interpolators 42, 42',... 42'''. The factor of 4 compensates for the insertion of zero pixel columns and rows as explained above.

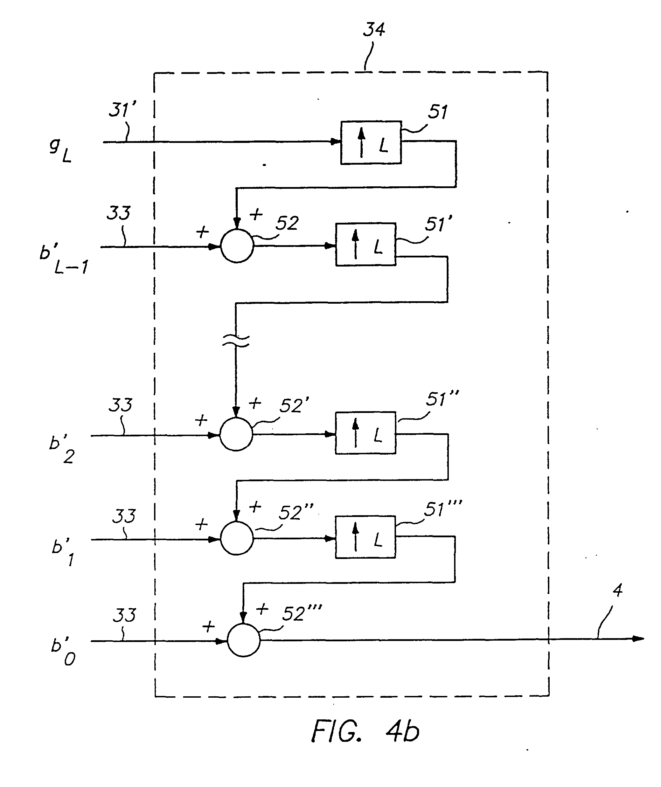

The corresponding reconstruction process is depicted in Fig. 4b. The residual image is first interpolated by interpolator 51 to twice its original size and the interpolated image is next pixelwise added to the detail image of the coarsest level $b'_{L-1}$, using adder 52.

The resulting image is interpolated and added to the next finer detail image. If this process is iterated L times using the unmodified detail images $b_{L-1}$ .. $b_0$ then an image equal to the original image 2 will result.

If at the other hand the detail images are modified before reconstruction according to the findings of the present invention, then an image with reduced noise level will result. The interpolators 51, 51' .. 51''' are identical to those used in the decomposition section.

Other embodiments of the pyramidal decomposition and reconstruction section 30 and 34 are based on hierarchically applying image transforms using basis functions, which may be orthogonal. A few embodiments of this category are described extensively in EP-A-527 525.

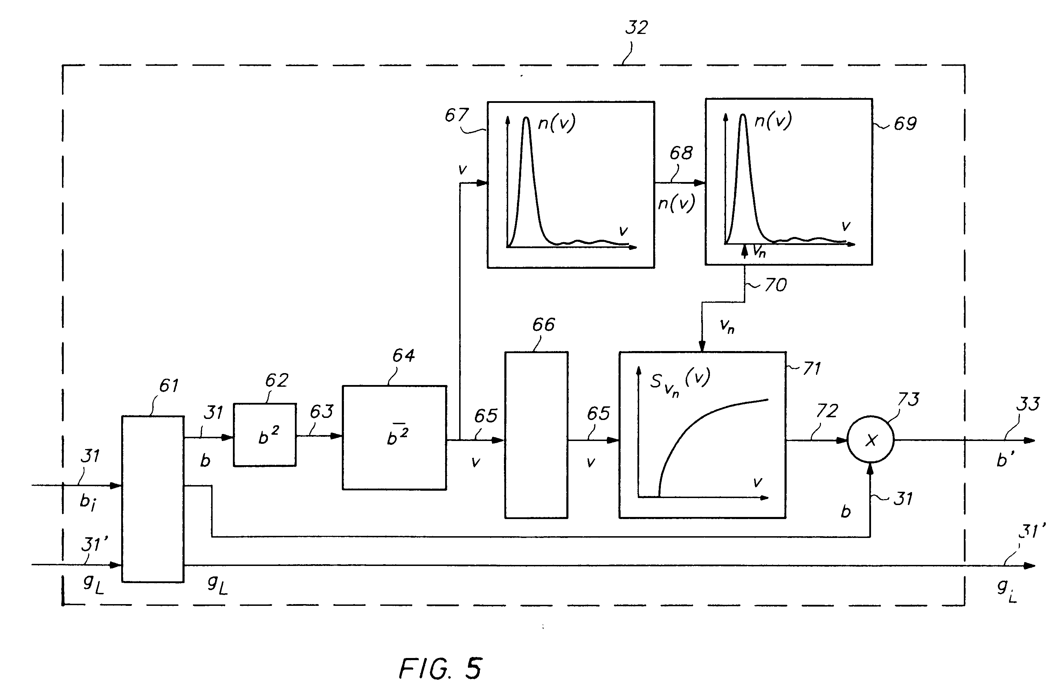

A preferred embodiment of the pyramidal noise reduction section 32 in accordance with the findings of the present invention is depicted in Fig. 5.

It comprises a memory 61 for temporarily storing the detail images 31 resulting from the decomposition stage, and the residual image. Each detail image $b_i$ stored in the memory is next pixelwise transferred to a squaring unit 62, starting with the coarsest detail image. A moving average operator 64 then computes the local variance v at every pixel position by summing all squared pixel values in an NxN neighborhood centered around the current target pixel (a neighborhood of 15x15 elements proved to be adequate), and dividing the sum by the number of pixels in the neighborhood. These local variance pixels 65 are temporarily stored in a second memory 66, and are transferred at the same time to a histogram computation unit 67. A histogram is an array, the elements of which are called bins, each bin corresponding to a fixed sampling interval of the signal range associated with the horizontal histogram axis. Each bin resides in a memory cell, all of them being initialised to zero before accepting the first pixel. For each entered variance value the histogram computation unit 67 selects the corresponding bin index and increments the associated bin value by one. After all pixels of a variance image 65 at a particular resolution level have been used this way, the histogram represents the occurrence of every quantised variance value throughout the image.

This local variance histogram 68 is next supplied to a maximum locator 69, which determines the variance value with the highest occurence $v_n$ in the histogram. This value is used as an estimate for the noise variance within the considered detail image.

The soundness of this estimation technique has been proven by two experimental studies.

In a first experiment we used the above method to compute the histogram of the local variance of the detail images obtained from pyramidal decomposition of natural images containing uniform additive zero-mean band-limited noise.

Inspecting the results we found that the detail variance histograms corresponding to the finest resolution levels in the pyramidal decomposition, are unimodal with a very narrow peak near zero, and very low occurences corresponding to the higher variance values. This is in accordance with the fact that the majority of the pixels in the finer detail images carry no image detail, but all of them are affected by noise, hence the highest peak merely corresponds to the noise distribution.

Furthermore this peak is very narrow since the variance of the noise, locally measured, is uniform across the image.

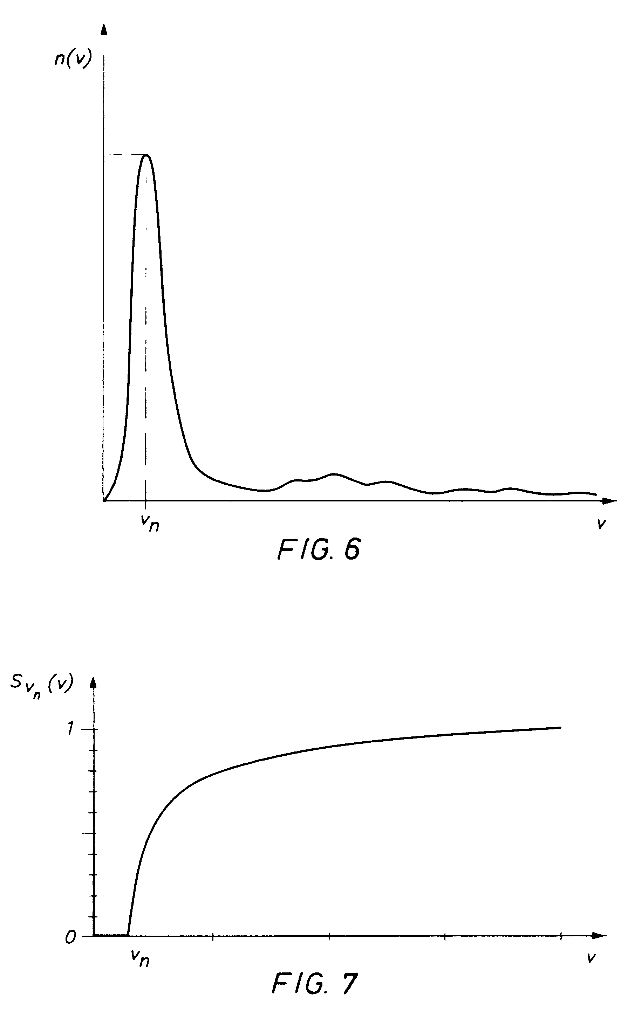

A typical histogram is sketched in Fig. 6. In the histograms corresponding to the detail variance images of increasing coarseness, we found that the dominance of the peak near zero diminishes gradually with respect to the local occurrence maxima at higher variance values. This is explained by the fact that in the coarser images the noise is substantially less, and the majority of pixels carry significant image detail, the variance of which is fluctuating across the image, so the histogram shape may not be unimodal anymore.

In a second experiment the above method for estimating the noise variance $v_n$ in each of the detail images was applied to a series of digital images which were generated by adding a different amount of gaussian noise to the same original image, doubling the noise variance for each consecutive picture.

For each resolution level the resulting noise variance figures were compared with each other, and in the case of the finest resolution images, the computed noise variances differed by a factor of two as expected. This experiment confirmed the validity of our noise estimation method for the finer resolution detail images.

Referring to Fig.5 a preferred embodiment of the actual noise suppression method is described next. The noise variance $v_n$ 70 determined by the maximum locator is used as a parameter in the noise suppression function $S_{v_n}(v)$, which is defined as:

$$S_{v_n}(v) = 0 \qquad \text{if } v <= K * v_n$$

$$S_{v_n}(v) = 1 - K * v_n/v \qquad \text{otherwise} \tag{1}$$

where K is a fixed noise suppression factor which determines the amount of noise suppression to be applied; K=0 implies no noise suppression.

The threshold $K*v_n$ on the argument v accounts for the fact that statistical variation may cause the local variance v to be smaller than $v_n$, in which case negative values of $S_{v_n}$ would result without thresholding.

Fig. 7 shows an example plot of the noise suppression function, for K=1. This function is computed and installed as a noise suppression lookup table 71 for every detail image within the decomposition.

After a noise suppression lookup table corresponding to a particular resolution level has been installed, all variance pixels 65 corresponding to the same level are fetched from the memory 66, and transformed into a sequence of attenuation coefficients 72. The resulting pixels 33 are computed by pixelwise multiplying these coefficients with the pixels of the detail image at the same level, fetched from the memory 61.

This whole process is repeated for all detail images up to the finest resolution level, to yield the attenuated detail images $b'_i$ 33, which are finally transferred to the reconstruction section 34 along with the unaltered residual image 31', according to the flow depicted in Fig. 3a.

As a result of the above computations all detail pixels whose local variance considerably exceeds the noise variance corresponding to the same resolution level are likely to carry significant image detail and will be left nearly unaltered, while those detail pixels at image positions where the local variance is comparable to the noise variance, are attenuated appreciably since these are not assumed to represent useful information, but merely noise. The shape of the noise suppression function $S_{v_n}$ (v) determines the gradual transition from maximal to no attenuation. Although many functional models will serve the above purpose, any suitable noise suppression function in accordance with the findings of the present invention should have a very steep slope at the abscissa that corresponds to the lowest detail variance that is considered to be relevant, which is normally the noise level, or some fixed fraction K of it. The larger this noise suppression factor K is chosen, the larger the effect of noise suppression will be, but at the same time the risc of suppressing a subtle detail of interest increases, so care must be taken when choosing a K-value greater than 1.

The above formulation (1) of noise suppression as a function of local variance has strong statistical support as we found from the following theoretical derivation, assuming zero mean additive uncorrelated noise:

Let $x$ represent the unknown noise free approximation image at some resolution level i (pixel indices are omitted),
let x denote the noise filtered approximation image at the same level, at corresponding pixel positions,
let n be the unknown noise component at level i,
and let z represent the observed approximation image, i.e. the unfiltered approximation image $g_i$ which would be obtained if reconstruction were applied to the unmodified detail images and the residual image, up to level i:

$$z = x + n \tag{2}$$

No further statistical model is needed for the signal x: we use the image itself to estimate at every pixel the a priori mean $x_{mean}$ and variance $v_x$. Then from (2) one finds

$$x_{mean} = z_{mean} \tag{3}$$

where $z_{mean}$ is the local average of the observed image z, and

$$v_x = v - v_n \tag{4}$$

in which v denotes the local variance of the unfiltered signal z, $v_n$ the noise variance 70 as determined by the maximum locator, and $v_x$ the estimated local variance of the unknown noise free signal.
We consider a linear filter of the form

$$\hat{x} = r\, x_{mean} + s\, z \tag{5}$$

where $\hat{x}$ is the minimum mean square estimate of x searched for, and r and s are chosen to minimize the norm J

$$J = E[(x - \hat{x})^2] \tag{6}$$

in which E denotes the expectation operator.

By substituting equations (3) and (5) into (6), and setting the following partial derivatives to zero:

$$\frac{dJ}{dr} = \frac{dJ}{ds} = 0 \tag{7}$$

yields

$$E[\, x_{mean}\, (x - r\, x_{mean} - s\, z)\,] = 0 \tag{8}$$

and

$$E[\, z\, (x - r\, x_{mean} - s\, z)\,] = 0 \tag{9}$$

From (3) and (8) one obtains

$$r = 1 - s \tag{10}$$

From (9) and (10), and using (3) it follows

$$E[\, z\, (x - x_{mean}) - s\, z\, (z - z_{mean})\,] = 0 \tag{11a}$$

By only substituting z in the first term by (2) and using (4) one obtains

$$s = \frac{v_x}{v} = 1 - \frac{v_n}{v} \tag{11b}$$

Equation (11b) forms the basis of the noise suppression function eq. (1) described above.

The filter equation (5) then rereads as

$$\hat{x} = z_{mean} + s\, (z - z_{mean}) \tag{12}$$

Each stage of the very efficient implementation of pyramidal noise suppression using noise suppression functions as described above is equivalent to the optimal filter (12) if the local average $z_{mean}$ in (12) is computed as the previous coarser approximation of z within the pyramid, i.e. the approximation image $g_{i+1}$, after proper interpolation to the same size as z. With this implementation the computation of the local average $z_{mean}$ does not require additional computation power, since it is computed anyhow at each stage of the reconstruction process as described above.

If the local average is computed this way, then the term $(z - z_{mean})$ in (12) exactly corresponds to the detail image $b_i$ 31. With this efficient implementation the noise filtering (12) simply reduces to pixelwise multiplying the detail images by the corresponding coefficients s (which in our preferred embodiment correspond to the appropriate values of the noise suppression function), and perform the reconstruction using the thus modified detail images $b'_i$ 33, which correspond to the term $b\, (z - z_{mean})$ in 12. This is repeated up to the finest resolution level, so the approximation images resulting from the adders 52, 52', ..52''' each correspond to the optimal estimate $\hat{x}$ of the noise free approximation x at the corresponding resolution level.

In most natural images the noise is not restricted to a very narrow spatial frequency band but extends across many octaves. If one tries to smooth the noise with a fixed sized convolution filter that covers the whole spatial frequency band of the noise, then important image details are likely to be blurred or suppressed. Ideally both the degree of smoothing and the filter size must be adapted to the local image statistics. In the above noise suppression method the degree of smoothing is adapted to the locally estimated amount of image variance. The problem of adaptively sizing the filter kernel which is hard to solve, is circumvented in the above method by consecutively applying the noise suppression operation to a particular detail image that only contains that portion of the pictorial information that is restricted to a narrow spatial frequency band.

The smoothing itself is embedded in the low pass filtering 41 and subsequent interpolation 42. The degree to which every detail pixel $b_i$ is suppressed determines the proportional contribution of the remaining low pass component at that resolution level to the accumulated resulting pixel value.

The noise level obviously decreases at every coarser resolution level, therefore it is estimated at every individual level for optimal adaptation. Since the noise variance level decreases rapidly with increasing coarseness the decomposition process may be terminated after only a few iterations, typically 3 to 5. This is a practical limit to the number of resolution levels L at which noise suppression is to be applied in most cases.

As a result of the above noise reduction method the overall image acuity may somewhat diminish. This is due to the fact that the noise components are more prominent in the finer resolution detail images than in the coarser ones, hence detail images of the finer resolution levels on the average will be attenuated more than the coarser detail images. In order to compensate for this general trend of high spatial frequency attenuation it may be desirable to explicitly amplify the finer detail images relatively to the coarser detail images before reconstruction. An embodiment of such a compensation method is described next.

For each resolution level at which noise reduction is applied according to the present invention, the average value of the noise attenuation coefficients 72 across the image is computed. This computation can be done more efficiently by considering each local variance value on the abscissa axis of the local variance histogram 68, computing the corresponding noise attenuation coefficient using the noise suppression lookup table 71, multiplying this attenuation coefficient by the histogram frequency of the considered local variance, summing this quantity across all histogram bins, and dividing the final sum by the number of bins.

The desired compensation is performed by amending the noise suppression lookup tables 71 before these are used for attenuating the detail images according to the present invention, the amendment being such that each said lookup table is divided by the above average noise attenuation coefficient of the corresponding resolution level if full acuity loss compensation is desired, or alternatively that each said lookup table is divided by a value which is larger than said average noise attenuation coefficient, but smaller than one if only partial compensation is desired.

A method to control said acuity loss compensation is implemented by means of the following noise suppression functions:

$$S_{v_n}(v) = 0 \qquad \text{if } v <= K * v_n$$

$$S_{v_n}(v) = (1 - K * v_n/v) * (1 + C(1/A - 1)) \qquad \text{otherwise,}$$

(13) where A is the average of the function $S_{v_n}(v)$ as defined by (1) evaluated across the entire corresponding image, and C is a parameter within the range 0..1, which specifies the desired relative amount of compensation for acuity loss.

If for some specific application the images have fairly constant noise statistics, then the detail image noise variances will also remain constant and can be computed in advance for the whole class of images representative of the application field. In an alternative embodiment these predetermined noise variance values are stored in a table. This way it is no longer required to compute the histogram, hence the histogram computation section 67 and maximum locator 69 are omitted. The memory 66 is not needed neither, since the local variance values 65 can be fed to the noise suppression lookup table 71 directly as they become available from the local averaging unit 64.

Even the noise suppression functions corresponding with all resolution levels may be precomputed and stored into a table.

When the detail images are enhanced according to one of the above methods, and next accumulated in the previously described reconstruction section according to the above reconstruction methods, then the dynamic range of the resulting signal will deviate from the original range, and even to a large extent if contrast boosting is applied to the detail images after noise reduction as described above.

Therefore the resulting image signal is ultimately reduced to the dynamic range of the original image signal, or even smaller. In a preferred embodiment the above reduction of dynamic range is accomplished by means of a lookup table, which maps said reconstructed image signal to an output signal which represents the desired screen brightness or film density. The mapping is monotonic and may be linear or curved, depending on the desired gradation.

**Claims**

1. A method for reducing noise in a digital image represented by an array of pixel values by processing said digital image, comprising the steps of:

   a) decomposing (30) said digital image (2) into a set of detail images (31) at multiple resolution levels and a residual image (31') at a resolution level lower than said multiple resolution levels,
   b) processing (32) said detail images,
   c) computing a processed image by applying a reconstruction algorithm (34) to the residual image (31') and the processed detail images (33'), said reconstruction algorithm being such that if it were applied to the residual image (31') and the detail images (31) without processing, then said digital image (2) or a close approximation thereof would be obtained,

**characterised in that** said processing comprises the steps of

d) estimating (61-66) the noise level in each detail image or recalling said noise level from a noise table comprising predetermined typical noise level values corresponding to detail images with similar noise statistics,

e) establishing a local observation neighbourhood around each pixel of each detail image and estimating (61-70) local image content within said neighbourhood,

f) pixelwise attenuating the detail images as a function of the estimated amount of image content and in accordance with said estimated noise level (71-73).

2. A noise reducing method according to claim 1 wherein said noise level is determined as the estimated noise variance in each detail image.

3. A noise reducing method according to claim 2 wherein a set of noise suppression functions are computed, each function associated with one of said detail images,

    said functions being monotonically non-decreasing in one variable and parametrically depending on said noise variance in a non-increasing monotonic way and said functions being positive and asymptotically reaching a maximum value equal to one, and

    wherein each detail image is attenuated by multiplying it by the associated noise suppression function evaluated at an abscissa equal to said local detail image variance.

4. A noise reducing method according to claim 1 wherein the multiresolution representation has a pyramidal structure, such that the number of pixels in each detail image decreases at each coarser resolution level.

5. A noise reducing method according to claim 1 wherein the detail image at the finest resolution level is obtained as the pixelwise difference between the digital image and an image obtained by low pass filtering the digital image, and wherein the successive coarser resolution level detail images are obtained by taking the pixelwise difference between two low pass filtered versions of the digital image, the second filter having a smaller bandwidth than the former.

6. A noise reducing method according to claim 1

    - wherein the detail images at successively coarser resolution levels are obtained as the result of each of K iterations of the following steps:

        a) computing an approximation image at a next coarser level by applying a low pass filter to the approximation image corresponding to the current iteration, and subsampling the result in proportion to the reduction in spatial frequency bandwidth, using the digital image as input to said low pass filter in the course of the first iteration;

        b) computing a detail image as the pixelwise difference between the approximation image corresponding to the current iteration and the approximation image at a next coarser resolution level computed according the method sub(a), both images being brought into register by proper interpolation of the latter image;

    - and wherein the residual image is equal to the approximation image produced by the last iteration,
    - and wherein said processed image is computed by iterating K times the following procedure starting from the coarsest detail image and the residual image:

        computing the approximation image at the current resolution level by pixelwise adding the detail image at the same resolution level to the approximation image at the coarser resolution level corresponding to the previous iteration, both images being brought into register by proper interpolation of the latter image, using the residual image instead of said coarser approximation image in the course of the first iteration.

7. A noise reducing method according to claim 6 wherein said subsampling factor is 2, and said low-pass filter has an impulse response which approximates a two-dimensional gaussian distribution.

8. A method according to claim 1 wherein

said multiresolution representation is obtained by applying a transform to said image yielding detail transform images at multiple resolution levels and a residual coefficient, each detail transform image comprising a set of transform coefficients expressing the relative contribution to the digital image of the corresponding basis function out of a set of predetermined basis functions, each of said functions representing local detail at a specific resolution level and being non-periodic, and having zero mean value,
and wherein said transform is such that there exists an inverse transform which returns the digital image or a close approximation thereof when being applied to said transform coefficients and said residual coefficient.

9. A noise reducing method according to claim 8 wherein said noise level is determined as the estimated noise variance in each transform image.

10. A noise reducing method according to claim 9 wherein a set of noise suppression functions are computed, each function associated with one of said transform images, said functions being monotonically non-decreasing in one variable and parametrically depending on said noise variance in a non-increasing monotonic way, said functions being positive and asymptotically reaching a maximum value equal to one, and wherein said attenuation is performed by multiplying each transform image by the associated noise suppression function evaluated at an abscissa equal to said local transform image variance.

11. A noise reducing method according to claim 8 wherein said basis functions are orthogonal.

12. A noise reducing method according to claim 11 wherein said functions are discrete wavelets.

13. A noise reducing method according to claims 2 or 9 wherein said estimation of the noise variance in an image comprises the steps of:

a) establishing a compact neighbourhood around each pixel of said image, computing the local variance at each center pixel based on the statistics within said neighbourhood, and using said local variance at every pixel to update the corresponding entry of a local variance histogram associated with said image;
b) designating the noise variance of said image as the local variance value that corresponds to the highest number of occurences within said histogram.

14. A noise reducing method according to claim 13 wherein said local variance is computed as the average squared value of all pixels within said neighbourhood.

15. A noise reducing method according to claims 3 or 10 wherein said noise suppression functions are such that the statistical expected value of the noise power in the reconstructed image is minimal.

16. A noise reducing method according to claims 3 or 10 wherein said noise suppression functions are defined as:

$$S_{v_n}(v) = 0 \qquad \text{if } v <= K * v_n$$

$$S_{v_n}(v) = 1 - K * v_n/v \qquad \text{otherwise}$$

where $S_{v_n}$ is the noise suppression function corresponding to a noise variance $v_n$, where $v$ represents the local variance, and
where K is a noise suppression factor which specifies the amount of noise suppression to be applied.

17. A noise reducing method according to claims 1 or 8 wherein said multiresolution decomposition comprises at least one and at most five detail or transform images and one residual image or residual coefficient respectively.

18. A noise reducing method according to any of the preceding claims wherein the loss of acuity due to the stronger noise suppression in the finer detail images or detail transform images is compensated for by pixelwise multiplying each of the detail images or detail transform images with a factor which is larger for the finer resolution levels than it is for the coarser levels.

19. A noise reducing method according to claim 16 modified in that said noise suppression functions are defined as:

$$S_{v_n} (v) \; 0 \qquad \text{if } v <= K * v_n$$

$$S_{v_n} (v) = (1 - K * v_n/v) * (1 + C(1/A - 1)) \qquad \text{otherwise,}$$

where A is the average of the function $S_{v_n}$ (v) as defined sub claim 16 evaluated across the entire corresponding image, and C is a parameter within the range 0..1, which specifies the desired relative amount of compensation for acuity loss.

20. A noise reducing method according to any of the preceding claims wherein attenuated detail images or attenuated detail transform images are additionally converted by means of a contrast enhancing non-linear monotonically increasing odd mapping function having a slope that gradually decreases with increasing absolute argument values.

21. A noise reducing method according to any of the preceding claims wherein the digital image is preprocessed in such a way that its noise characteristics are approximately uniform, additive, band-limited and have zero mean value.

22. A noise reducing method according to claim 21 wherein said preprocessing consists of converting the original pixel values into the square root of said pixel values.

23. A noise reducing method according to any of the preceding claims wherein the dynamic range of the processed image is reduced by mapping the processed image onto a desired output dynamic range according to some specified gradation curve.

24. An apparatus for processing an electronic representation of an image comprising

- means (30) for decomposing said electronic representation into a sequence of detail images at multiple resolution levels and a residual image at a resolution level lower than the minimum of said multiple resolution levels,
- means (32) for processing said detail images,
- means (34) for computing a processed image by applying a reconstruction algorithm to the residual image and the processed detail images, said reconstruction algorithm being such that if it were applied to the residual image and the detail images without processing, then said electronic image or a close approximation thereof would be obtained,

**characterised in that** said apparatus comprises

- means (61) for storing said detail images,
- means (62-70) for estimating the noise level in each detail image or recalling said noise level from a noise table comprising predetermined typical noise level values corresponding to detail images with similar noise statistics;
- means (62-66) for estimating local image content within a neighbourhood around each pixel in each said detail image,
- means (71,73) for pixelwise attenuating each detail image as a function of said local image content in accordance with said estimated noise level.

25. An apparatus according to claim 24 comprising

- means for reading out detail images at each resolution level from storage means (61),
- means (62,64) for computing the local variance of pixels in a neighbourhood at each position in said detail images,
- means (66) for storing said local variance pixels,
- a histogram computation circuit (67) for computing at each resolution level the histogram of the computed local variance values,
- a maximum locator (69) for estimating the noise variance as the variance value with the highest occurrence within said histogram,
- means (71) for pixelwise computing an attenuation coefficient as a function of local variance at each pixel in said detail images, in accordance with said noise variance at the corresponding resolution level,

- and a multiplier (73) for pixelwise multiplying each detail image at a particular resolution level with the corresponding attenuation coefficients.

26. Apparatus according to claim 24 additionally comprising an image acquisition section (1) comprising an apparatus (14-19) for reading out a radiation image stored in a photostimulable phosphor screen by scanning said screen with stimulating radiation, detecting the light emitted upon stimulation and converting the detected light into an electronic representation.

**Patentansprüche**

1. Verfahren zum Reduzieren von Rauschen in einem durch ein Array von Pixelwerten dargestellten digitalen Bild durch Verarbeiten des digitalen Bilds, mit den folgenden Schritten:

   a) Zerlegen (30) des digitalen Bilds (2) in einen Satz von Detailbildern (31) mit mehreren Auflösungsniveaus und ein Restbild (31') mit einem unter den mehreren Auflösungsniveaus liegenden Auflösungsniveau,

   b) Verarbeiten (32) der Detailbilder,

   c) Berechnen eines verarbeiteten Bilds durch Anwenden eines Rekonstruktionsalgorithmus (34) auf das Restbild (31') und die verarbeiteten Detailbilder (33'), wobei der Rekonstruktionsalgorithmus derart ist, daß bei seiner Anwendung auf das Restbild (31') und die Detailbilder (31) ohne Verarbeitung das digitale Bild (2) oder eine gute Annäherung daran erhalten werden würde, **dadurch gekennzeichnet, daß** das Verarbeiten die folgenden Schritte umfaßt:

   d) Schätzen (61-66) des Rauschpegels in jedem Detailbild oder Abrufen des Rauschpegels aus einer Rauschtabelle, die vorbestimmte typische Rauschpegelwerte umfaßt, die Detailbildern mit ähnlichen Rauschstatistiken entsprechen,

   e) Festlegen einer örtlichen Beobachtungsnachbarschaft um jedes Pixel jedes Detailbilds und Schätzen (61-70) des örtlichen Bildinhalts in der Nachbarschaft,

   f) pixelmäßiges Dämpfen der Detailbilder als Funktion des geschätzten Ausmaßes an Bildinhalt und gemäß dem geschätzten Rauschpegel (71-73).

2. Rauschreduktionsverfahren nach Anspruch 1, wobei der Rauschpegel als die geschätzte Rauschvarianz in jedem Detailbild bestimmt wird.

3. Rauschreduktionsverfahren nach Anspruch 2, wobei ein Satz von Rauschunterdrückungsfunktionen berechnet wird, wobei jede Funktion einem der Detailbilder zugeordnet ist,
   wobei die Funktionen in einer Variablen monoton nicht abnehmen und parametrisch auf eine nicht zunehmende monotone Weise von der Rauschvarianz abhängen und die Funktionen positiv sind und asymptotisch einen Höchstwert gleich Eins erreichen, wobei jedes Detailbild gedämpft wird, indem es mit der bei einer Abszisse, die der örtlichen Detailbildvarianz gleich ist, ausgewerteten zugeordneten Rauschunterdrückungsfunktion multipliziert wird.

4. Rauschreduktionsverfahren nach Anspruch 1, wobei die Mehrfachauflösungsdarstellung eine derartige pyramidenförmige Struktur aufweist, daß die Anzahl der Pixel in jedem Detailbild bei jedem gröberen Auflösungsniveau abnimmt.

5. Rauschreduktionsverfahren nach Anspruch 1, wobei das Detailbild mit dem feinsten Auflösungsniveau erhalten wird als die pixelmäßige Differenz zwischen dem digitalen Bild und einem durch eine Tiefpaßfilterung des digitalen Bilds erhaltenen Bild und wobei die nachfolgenden Detailbilder mit gröberem Auflösungsniveau erhalten werden, indem die pixelmäßige Differenz zwischen zwei tiefpaßgefilterten Versionen des digitalen Bilds genommen wird, wobei das zweite Filter eine kleinere Bandbreite als das erstere aufweist.

6. Rauschreduktionsverfahren nach Anspruch 1,

- wobei die Detailbilder mit nacheinander gröberen Auflösungsniveaus als Ergebnis jeder von K Iterationen der folgenden Schritte erhalten wurden:

  a) Berechnen eines Näherungsbilds mit einem nächstgröberen Niveau durch Anwenden eines Tiefpaßfilters auf das Näherungsbild entsprechend der aktuellen Iteration und Unterabtastung des Ergebnisses proportional zur Reduzierung der Raumfrequenzbandbreite, wobei im Verlauf der ersten Iteration das Digitalbild als Eingangssignal fur das Tiefpaßfilter verwendet wird;
  b) Berechnen eines Detailbilds als der pixelmäßigen Differenz zwischen dem Näherungsbild entsprechend der aktuellen Iteration und dem entsprechend dem Verfahren unter (a) berechneten Näherungsbilds mit einem nächstgröberen Auflösungsniveau, wobei beide Bilder durch richtige Interpolation des letzteren Bilds in Registrierung gebracht werden;

- und wobei das Restbild gleich dem durch die letzte Iteration hergestellten Näherungsbild ist,

- und wobei das verarbeitete Bild durch K-faches Iterieren des folgenden Vorgangs berechnet wird, wobei von dem gröbsten Detailbild und dem Restbild ausgegangen wird:

  Berechnen des Näherungsbilds mit dem aktuellen Auflösungsniveau durch pixelmäßiges Addieren des Detailbilds mit dem gleichen Auflösungsniveau zu dem Näherungsbild mit dem gröberen Auflösungsniveau entsprechend der vorausgegangenen Iteration, wobei beide Bilder durch richtige Interpolation des letzteren Bilds in Registrierung gebracht werden, wobei im Verlauf der ersten Iteration das Restbild anstelle des gröberen Näherungsbilds verwendet wird.

**7.** Rauschreduktionsverfahren nach Anspruch 6, wobei der Unterabtastungsfaktor 2 ist und das Tiefpaßfilter eine Impulsantwort aufweist, die einer zweidimensionalen Gaußschen Verteilung nahekommt.

**8.** Verfahren nach Anspruch 1, wobei

  die Mehrfachauflösungsdarstellung erhalten wird durch Anwenden einer Transformation auf das Bild, wodurch man transformierte Detailbilder mit mehreren Auflösungsniveaus und einen Restkoeffizienten erhält, wobei jedes transformierte Detailbild einen Satz von Transformationskoeffizienten umfaßt, die den relativen Beitrag der entsprechenden Basisfunktion aus einem Satz vorbestimmter Basisfunktionen zu dem digitalen Bild zum Ausdruck bringen, wobei jede der Funktionen ein örtliches Detail mit einem spezifischen Auflösungsniveau darstellt und nichtperiodisch ist und einen Mittelwert von Null aufweist,

  und wobei die Transformation derart ist, daß eine inverse Transformation existiert, die bei Anwendung auf die Transformationskoeffizienten und den Restkoeffizienten das digitale Bild oder eine gute Annäherung davon zurückgibt.

**9.** Rauschreduktionsverfahren nach Anspruch 8, wobei der Rauschpegel als die geschätzte Rauschvarianz in jedem transformierten Bild bestimmt wird.

**10.** Rauschreduktionsverfahren nach Anspruch 9, wobei ein Satz von Rauschunterdrückungsfunktionen berechnet wird, wobei jede Funktion einem der transformierten Bilder zugeordnet ist,
wobei die Funktionen in einer Variablen monoton nicht abnehmen und parametrisch auf eine nicht zunehmende monotone Weise von der Rauschvarianz abhängen, wobei die Funktionen positiv sind und asymptotisch einen Höchstwert gleich Eins erreichen und
wobei die Dämpfung durchgeführt wird, in dem jedes transformierte Bild mit der bei einer Abszisse, die gleich der Varianz des örtlichen transformierten Bilds ist, ausgewerteten zugeordneten Rauschunterdrückungsfunktionen multipliziert wird.

**11.** Rauschreduktionsverfahren nach Anspruch 8, wobei die Basisfunktionen orthogonal sind.

**12.** Rauschreduktionsverfahren nach Anspruch 11, wobei die Funktionen diskrete Wavelets sind.

**13.** Rauschreduktionsverfahren nach Anspruch 2 oder 9, wobei die Schätzung der Rauschvarianz in einem Bild die folgenden Schritte umfaßt:

a) Festlegen einer kompakten Nachbarschaft um jedes Pixel des Bilds herum, Berechnen der örtlichen Varianz bei jedem mittleren Pixel auf der Grundlage der Statistik in der Nachbarschaft und Verwendung der örtlichen Varianz bei jedem Pixel zum Aktualisieren des entsprechenden Eintrags eines dem Bild zugeordneten Histogramms der örtlichen Varianz;

b) Bezeichnen der Rauschvarianz des Bilds als den örtlichen Varianzwert, der der höchsten Anzahl von Vorkommen in dem Histogramm entspricht.

**14.** Rauschreduktionsverfahren nach Anspruch 13, wobei die örtliche Varianz als der mittlere quadrierte Wert aller Pixel in der Nachbarschaft berechnet wird.

**15.** Rauschreduktionsverfahren nach Anspruch 3 oder 10, wobei die Rauschunterdrückungsfunktionen derart sind, daß der statistische erwartete Wert der Rauschleistung in dem rekonstruierten Bild minimal ist.

**16.** Rauschreduktionsverfahren nach Anspruch 3 oder 10, wobei die Rauschunterdrückungsfunktionen definiert sind als:

$$S_{v_n}(v) = 0 \qquad \text{falls } v <= K * v_n$$

$$\text{ansonsten} \qquad S_{v_n}(v) = 1 - K * v_n/v$$

wobei $S_{v_n}$ die einer Rauschvarianz $v_n$ entsprechende Rauschunterdrückungsfunktion ist, wobei v die örtliche Varianz darstellt, und wobei K ein Rauschunterdrückungsfaktor ist, der das Ausmaß der anzuwendenden Rauschunterdrückung spezifiziert.

**17.** Rauschreduktionsverfahren nach Anspruch 1 oder 8, wobei die Mehrfachauflösungszerlegung mindestens ein und höchstens fünf Detail- oder transformierte Bilder beziehungsweise ein Restbild oder einen Restkoeffizienten umfaßt.

**18.** Rauschreduktionsverfahren nach einem der vorhergehenden Ansprüche, wobei der Verlust an Schärfe aufgrund der stärkeren Rauschunterdrückung in den feineren Detailbildern oder transformierten Detailbildern dadurch kompensiert wird, daß jedes der Detailbilder oder transformierten Detailbilder pixelmäßig mit einem Faktor multipliziert wird, der für die feineren Auflösungsniveaus größer ist als fur die gröberen Niveaus.

**19.** Rauschreduktionsverfahren nach Anspruch 16, dahingehend modifiziert, daß die Rauschunterdrückungsfunktionen definiert sind als:

$$S_{v_n}(v) = 0 \qquad \text{falls } v <= K * v_n$$

$$\text{ansonsten} \qquad S_{v_n}(v) = (1 - K * v_n/v) * (1 + C(1/A - 1))$$

wobei A der Mittelwert der Funktion $S_{v_n}(v)$ wie in Anspruch 16 definiert ist, bewertet über das ganze entsprechende Bild hinweg und C ein Parameter in dem Bereich 0..1 ist, der das gewünschte relative Ausmaß an Kompensation für Schärfeverlust spezifiziert.

**20.** Rauschreduktionsverfahren nach einem der vorhergehenden Ansprüche, wobei gedämpfte Detailbilder oder gedämpfte transformierte Detailbilder mit Hilfe einer kontrastverstärkenden nichtlinearen monoton zunehmenden ungeraden Abbildungsfunktion mit einer Steigung, die mit steigenden absoluten Argumentwerten allmählich abnimmt, zusätzlich konvertiert werden.

**21.** Rauschreduktionsverfahren nach einem der vorhergehenden Ansprüche, wobei das digitale Bild derart vorverarbeitet wird, daß seine Rauscheigenschaften ungefähr gleichförmig, additiv und bandbegrenzt sind und einen Mittelwert von Null aufweisen.

**22.** Rauschreduktionsverfahren nach Anspruch 21, wobei die Vorverarbeitung daraus besteht, die Vorlagenpixelwerte in die Quadratwurzel der Pixelwerte zu konvertieren.

23. Rauschreduktionsverfahren nach einem der vorhergehenden Ansprüche, wobei der Dynamikbereich des verarbeiteten Bilds reduziert wird, indem das verarbeitete Bild entsprechend einer bestimmten spezifizierten Gradationskurve auf einen gewünschten Ausgabedynamikbereich abgebildet wird.

24. Vorrichtung zur Verarbeitung einer elektronischen Darstellung eines Bilds, umfassend:

- ein Mittel (30) zum Zerlegen der elektronischen Darstellung in einen Satz von Detailbildern mit mehreren Auflösungsniveaus und ein Restbild mit einem unter dem niedrigsten der mehreren Auflösungsniveaus liegenden Auflösungsniveau,

- ein Mittel (32) zum Verarbeiten der Detailbilder,

- ein Mittel (34) zum Berechnen eines verarbeiteten Bilds durch Anwenden eines Rekonstruktionsalgorithmus auf das Restbild und die verarbeiteten Detailbilder, wobei der Rekonstruktionsalgorithmus derart ist, daß bei seiner Anwendung auf das Restbild und die Detailbilder ohne Verarbeitung das elektronische Bild oder eine gute Annäherung daran erhalten werden würde, **dadurch gekennzeichnet, daß** die Vorrichtung folgendes umfaßt:

- ein Mittel (61) zum Speichern der Detailbilder,

- ein Mittel (62-70) zum Schätzen des Rauschpegels in jedem Detailbild oder Abrufen des Rauschpegels aus einer Rauschtabelle, die vorbestimmte typische Rauschpegelwerte umfaßt, die Detailbildern mit ähnlichen Rauschstatistiken entsprechen;

- ein Mittel (62-66) zum Schätzen des örtlichen Bildinhalts in einer Nachbarschaft um jedes Pixel in jedem Detailbild,

- ein Mittel (71, 73) zum pixelmäßigen Dämpfen jedes Detailbilds als Funktion des örtlichen Bildinhalts gemäß dem geschätzten Rauschpegel.

25. Vorrichtung nach Anspruch 24, die folgendes umfaßt:

- ein Mittel zum Auslesen von Detailbildern mit jedem Auflösungsniveau aus einem Speichermittel (61),

- ein Mittel (62, 64) zum Berechnen der örtlichen Varianz von Pixeln in einer Nachbarschaft bei jeder Position in den Detailbildern,

- ein Mittel (66) zum Speichern der örtlichen Varianzpixel,

- eine Histogrammberechnungsschaltung (67) zum Berechnen des Histogramms der berechneten örtlichen Varianzwerte mit jedem Auflösungsniveau,

- einen Maximumfinder (69) zum Schätzen der Rauschvarianz als dem Varianzwert mit dem höchsten Vorkommen in dem Histogramm,

- ein Mittel (71) zum pixelmäßigen Berechnen eines Dämpfungskoeffizienten als Funktion der örtlichen Varianz bei jedem Pixel in den Detailbildern gemäß der Rauschvarianz bei dem entsprechenden Auflösungsniveau,

- und einen Multiplizierer (73) zum pixelmäßigen Multiplizieren jedes Detailbilds mit einem bestimmten Auflösungsniveau mit den entsprechenden Dämpfungskoeffizienten.

26. Vorrichtung nach Anspruch 24, zusätzlich mit einem Bilderfassungsabschnitt (1), der eine Vorrichtung (14-19) umfaßt zum Auslesen eines in einem photostimulierbaren Leuchtstoffschirm gespeicherten Strahlungsbilds durch Abtasten des Schirms mit stimulierender Strahlung, Erfassen des bei Stimulierung emittierten Lichts und Konvertieren des erfaßten Lichts in eine elektronische Darstellung.

**EP 0 574 969 B1**

**Revendications**

1. Procédé de réduction du bruit dans une image numérique représentée par un réseau de valeurs de pixel par traitement de ladite image, comprenant les étapes de :

   a) décomposition (30) de ladite image numérique (2) en un ensemble d'images de détail (31) à des niveaux de résolution multiples et en une image résiduelle (31') à un niveau de résolution inférieur auxdits niveaux de résolution multiples,
   b) traitement (32) desdites images de détail,
   c) calcul d'une image traitée par application d'un algorithme de reconstitution (34) sur l'image résiduelle (31') et les images de détail traitées (33'), ledit algorithme de reconstruction étant tel que, s'il était appliqué sur l'image résiduelle (31') et les images de détail (31) sans aucun traitement, on obtiendrait alors ladite image numérique (2), ou une proche approximation de celle-ci,
   **caractérisé en ce que** ledit traitement comprend les étapes de
   d) estimation (61-66) du niveau de bruit dans chaque image de détail ou extraction dudit niveau de bruit d'une table de bruit comprenant des valeurs de niveau de bruit typiques prédéterminées correspondant à des images de détail possédant des statistiques de bruit similaires,
   e) établissement d'un voisinage d'observation local autour de chaque pixel de chaque image de détail et estimation (61-70) du contenu d'image local à l'intérieur dudit voisinage,
   f) atténuation pixel par pixel des images de détail en fonction de la quantité de contenu d'image estimée et conformément audit niveau de bruit estimé (71-73).

2. Procédé de réduction du bruit selon la revendication 1, dans lequel ledit niveau de bruit est déterminé comme la variance du bruit estimé dans chaque image de détail.

3. Procédé de réduction du bruit selon la revendication 2, dans lequel un ensemble de fonctions d'élimination du bruit sont calculées, chaque fonction étant associée à l'une desdites images de détail,

   lesdites fonctions étant monotonement non décroissantes pour une variable, et paramétriquement dépendantes de ladite variance du bruit d'une façon monotone non décroissante, et
   lesdites fonctions étant positives et atteignant asymptotiquement une valeur maximale égale à un, et dans lequel chaque image de détail est atténuée en la multipliant par la fonction d'élimination du bruit associée évaluée en une abscisse égale à ladite variance locale de l'image de détail.

4. Procédé de réduction du bruit selon la revendication 1, dans lequel la représentation en résolutions multiples présente une structure pyramidale, de telle sorte que le nombre de pixels dans chaque image de détail diminue à chaque niveau de résolution plus grossier.

5. Procédé de réduction du bruit selon la revendication 1, dans lequel l'image de détail au niveau de résolution le plus fin est obtenue comme la différence pixel par pixel entre l'image numérique et une image obtenue par filtrage passe-bas de l'image numérique, et dans lequel les images de détail aux niveaux de résolution successivement plus grossiers sont obtenues en prenant la différence pixel par pixel entre deux versions obtenues par filtrage passe-bas de l'image numérique, la largeur de bande du deuxième filtre étant plus petite que celle du premier.

6. Procédé de réduction du bruit selon la revendication 1

   - dans lequel les images de détail à des niveaux de résolution successivement plus grossiers sont obtenues suite à chacune de K itérations des étapes suivantes :

     a) calcul d'une image d'approximation au niveau plus grossier suivant par application d'un filtre passe-bas sur l'image d'approximation correspondant à l'itération en cours, et sous-échantillonnage du résultat proportionnellement à la réduction de largeur de bande en fréquence spatiale, en utilisant l'image numérique comme entrée appliquée audit filtre passe-bas au cours de la première itération;
     b) calcul d'une image de détail comme la différence pixel par pixel entre l'image d'approximation correspondant à l'itération en cours et l'image d'approximation au niveau de résolution plus grossier suivant, calculée selon le procédé sous (a), les deux images étant mises en registre par interpolation adéquate de cette dernière image;

- et dans lequel l'image résiduelle est égale à l'image d'approximation produite par la dernière itération,
- et dans lequel ladite image traitée est calculée par itération K fois de la procédure suivante, en partant de l'image de détail la plus grossière et de l'image résiduelle :

calcul de l'image d'approximation au niveau de résolution en cours par addition, pixel par pixel, de l'image de détail au même niveau de résolution à l'image d'approximation au niveau de résolution plus grossier correspondant à l'itération précédente, les deux images étant mises en registre par interpolation adéquate de cette dernière image, en utilisant l'image résiduelle au lieu de ladite image d'approximation plus grossière au cours de la première itération.

7. Procédé de réduction du bruit selon la revendication 6, dans lequel ledit facteur de sous-échantillonnage est de 2, et ledit filtre passe-bas présente une réponse impulsionnelle approximant une distribution gaussienne bidimensionnelle.

8. Procédé selon la revendication 1, dans lequel

ladite représentation en résolutions multiples est obtenue par application d'une transformation sur ladite image donnant lieu à des images de transformation de détail à des niveaux de résolution multiples et à un coefficient résiduel, chaque image de transformation de détail comprenant un ensemble de coefficients de transformation exprimant la contribution relative à l'image numérique de la fonction élémentaire correspondante parmi un ensemble de fonctions élémentaires prédéterminées, chacune desdites fonctions représentant un détail local à un niveau de résolution spécifique et étant non périodique, et présentant une valeur moyenne nulle, et dans lequel ladite transformation est telle qu'il existe une transformation inverse qui renvoie l'image numérique ou une proche approximation de celle-ci lorsqu'elle est appliquée auxdits coefficients de transformation et audit coefficient résiduel.

9. Procédé de réduction du bruit selon la revendication 8, dans lequel ledit niveau de bruit est déterminé comme la variance de bruit estimée dans chaque image de transformation.

10. Procédé de réduction du bruit selon la revendication 9, dans lequel un ensemble de fonctions d'élimination du bruit sont calculées, chaque fonction étant associée à l'une desdites images de transformation, lesdites fonctions étant monotonement non décroissantes pour une variable, et paramétriquement dépendantes de ladite variance du bruit d'une façon monotone non décroissante, lesdites fonctions étant positives et atteignant asymptotiquement une valeur maximale égale à un, et dans lequel ladite atténuation se fait par multiplication de chaque image de transformation par la fonction d'élimination du bruit associée évaluée en une abscisse égale à ladite variance locale de l'image de transformation.

11. Procédé de réduction du bruit selon la revendication 8, dans lequel lesdites fonctions élémentaires sont orthogonales.

12. Procédé de réduction du bruit selon la revendication 11, dans lequel lesdites fonctions sont des ondelettes discrètes.

13. Procédé de réduction du bruit selon les revendications 2 ou 9, dans lequel ladite estimation de la variance du bruit dans une image comprend les étapes de :

a) établissement d'un voisinage compact autour de chaque pixel de ladite image, calcul de la variance locale à chaque pixel central sur la base des statistiques à l'intérieur dudit voisinage, et utilisation de ladite variance locale à chaque pixel pour mettre à jour l'entrée correspondante d'un histogramme de variances locales associé à ladite image;
b) désignation de la variance du bruit de ladite image comme la valeur de variance locale correspondant au plus grand nombre d'apparitions dans ledit histogramme.

14. Procédé de réduction du bruit selon la revendication 13, dans lequel ladite variance locale est calculée comme la valeur moyenne au carré de tous les pixels à l'intérieur dudit voisinage.

15. Procédé de réduction du bruit selon les revendications 3 ou 10, dans lequel lesdites fonctions d'élimination du bruit sont telle que la valeur statistique espérée de la puissance du bruit dans l'image reconstituée est minimale.

**16.** Procédé de réduction du bruit selon les revendications 3 ou 10, dans lequel lesdites fonctions d'élimination du bruit sont définies par :

$$S_{v_n} (v) = 0 \qquad \text{si } v <= K * v_n$$

$$S_{v_n} ( v ) = 1 - K * v_n/v \qquad \text{dans tous les autres cas}$$

où $S_{v_n}$ est la fonction d'élimination du bruit correspondant à une variance du bruit $v_n$, où v représente la variance locale, et où K est un facteur d'élimination du bruit qui spécifie la quantité d'élimination du bruit à appliquer.

**17.** Procédé de réduction du bruit selon les revendications 1 ou 8, dans lequel ladite décomposition en résolutions multiples comprend au moins un et au plus cinq images de détail ou de transformation et une image résiduelle ou un coefficient résiduel, respectivement.

**18.** Procédé de réduction du bruit selon l'une quelconque des revendications précédentes, dans lequel la perte d'acuité due à l'élimination plus poussée du bruit dans les images de détail plus fines ou dans les images de transformation de détail est compensée par la multiplication pixel par pixel de chacune des images de détail ou des images de transformation de détail par un facteur plus important pour les niveaux de résolution plus fins qu'il ne l'est pour les niveaux plus grossiers.

**19.** Procédé de réduction du bruit selon la revendication 16, modifié en ce que lesdites fonctions d'élimination du bruit sont définies par :

$$S_{v_n} (v) = 0 \qquad \text{si } v <= K * v_n$$

$$S_{v_n} (v) = (1 - K * v_n/v) * (1 + C(1/A - 1)) \qquad \text{dans tous les autres cas,}$$

où A est la moyenne de la fonction $S_{v_n}(v)$ telle que définie sous la revendication 16, évaluée sur la totalité de l'image correspondante, et C est un paramètre compris dans l'intervalle 0..1, spécifiant la quantité relative souhaitée de compensation de la perte d'acuité.

**20.** Procédé de réduction du bruit selon l'une quelconque des revendications précédentes, dans lequel les images de détail atténuées ou les images de transformation de détail atténuées font l'objet d'une conversion supplémentaire au moyen d'une fonction de mise en correspondance impaire linéaire à croissance monotone accentuant le contraste, dont la pente décroît progressivement avec des valeurs d'argument absolues croissantes.

**21.** Procédé de réduction du bruit selon l'une quelconque des revendications précédentes, dans lequel l'image numérique est prétraitée de manière à ce que ses caractéristiques de bruit soient approximativement uniformes, additives, à bande réduite et possèdent une valeur moyenne nulle.

**22.** Procédé de réduction du bruit selon la revendication 21, dans lequel ledit prétraitement comprend la conversion des valeurs de pixel d'origine en la racine carrée desdites valeurs de pixel.

**23.** Procédé de réduction du bruit selon l'une quelconque des revendications précédentes, dans lequel la gamme dynamique de l'image traitée est réduite par mise en correspondance de l'image traitée avec une gamme dynamique de sortie souhaitée selon une certaine courbe de gradation spécifiée.

**24.** Appareil de traitement d'une représentation électronique d'une image comprenant

- un moyen (30) pour décomposer ladite représentation électronique en une séquence d'images de détail à des niveaux de résolution multiples et en une image résiduelle à un niveau de résolution inférieur au minimum desdits niveaux de résolution multiples,
- un moyen (32) pour traiter lesdites images de détail,
- un moyen (34) pour calculer une image traitée par application d'un algorithme de reconstitution sur l'image résiduelle et les images de détail traitées, ledit algorithme de reconstruction étant tel que, s'il était appliqué sur l'image résiduelle et les images de détail sans aucun traitement, on obtiendrait alors ladite image électronique, ou une proche approximation de celle-ci,

**caractérisé en ce que** ledit appareil comprend

- un moyen (61) pour stocker lesdites images de détail,
- un moyen (62-70) pour estimer le niveau de bruit dans chaque image de détail ou extraire ledit niveau de bruit d'une table de bruit comprenant des valeurs de niveau de bruit typiques prédéterminées correspondant à des images de détail possédant des statistiques de bruit similaires;
- un moyen (62-66) pour estimer le contenu d'image local à l'intérieur d'un voisinage autour de chaque pixel dans chacune desdites images de détail,
- un moyen (71, 73) pour atténuer pixel par pixel chaque image de détail en fonction dudit contenu d'image local conformément audit niveau de bruit estimé.

25. Appareil selon la revendication 24, comprenant

- un moyen pour lire dans le moyen de stockage (61) des images de détail à chaque niveau de résolution,
- un moyen (62,64) pour calculer la variance locale de pixels dans un voisinage à chaque position dans lesdites images de détail,
- un moyen (66) pour stocker lesdits pixels à variance locale,
- un circuit de calcul d'histogramme (67) pour calculer à chaque niveau de résolution l'histogramme des valeurs de variance locale calculées,
- un localisateur de maximum (69) pour estimer la variance du bruit comme la valeur de variance apparaissant le plus fréquemment dans ledit histogramme,
- un moyen (71) pour calculer pixel par pixel un coefficient d'atténuation en fonction de la variance locale à chaque pixel dans lesdites images de détail, conformément à ladite variance du bruit au niveau de résolution correspondant,
- et un multiplicateur (73) pour multiplier pixel par pixel chaque image de détail à un niveau de résolution particulier par les coefficients d'atténuation correspondants.

26. Appareil selon la revendication 24, comprenant en outre une section d'acquisition d'images (1) comprenant un appareil (14-19) pour lire une image de rayonnement stockée dans un écran de luminophores photostimulable par balayage dudit écran à l'aide d'un rayonnement de stimulation, détection de la lumière émise lors de la stimulation et conversion de la lumière détectée en une représentation électronique.

FIG. 1

FIG. 2

EP 0 574 969 B1

30

32

Pyramidal
noise
reduction

34

2

31

31'

33

31'

4

3

FIG. 3a

EP 0 574 969 B1

Pyramidal noise reduction

*FIG. 3b*

FIG. 4a

FIG. 4b

| | | | | |
|---|---|---|---|---|
| 0.0025 | 0.0125 | 0.02 | 0.0125 | 0.0025 |
| 0.0125 | 0.0625 | 0.1 | 0.0625 | 0.0125 |
| 0.02 | 0.1 | 0.16 | 0.1 | 0.02 |
| 0.0125 | 0.0625 | 0.1 | 0.0625 | 0.0125 |
| 0.0025 | 0.0125 | 0.02 | 0.0125 | 0.0025 |

FIG. 4c

FIG. 5

EP 0 574 969 B1

EP 0 574 969 B1

FIG. 6

FIG. 7

30